# EUROPÄISCHE PATENTSCHRIFT

(11) **EP 2 024 654 B1**
(45) Veröffentlichungstag und Bekanntmachung des Hinweises auf die Patenterteilung: **27.01.2016**
(21) Anmeldenummer: 07728009.7
(22) Anmeldetag: 12.04.2007
(51) Int. Cl.: C23C 4/18, F16C 33/64

(54) **VERFAHREN ZUR HERSTELLUNG EINES WÄLZLAGERBAUTEILS**
METHOD FOR THE PRODUCTION OF A ROLLING BEARING COMPONENT
PROCÉDÉ DE FABRICATION D'UN COMPOSANT DE PALIER À ROULEMENT

(30) Priorität: 19.05.2006 DE 102006023567
(43) Veröffentlichungstag der Anmeldung: 18.02.2009
(73) Patentinhaber: Schaeffler Technologies AG & Co. KG, 91074 Herzogenaurach (DE)
(72) Erfinder: GÜNTHER, Doris, 90489 Nürnberg (DE); MERKLEIN, Carsten, 90409 Nürnberg (DE); SCHUSTER, Peter, 90513 Zirndorf (DE)
(86) Internationale Anmeldenummer: PCT/EP2007/053541
(87) Internationale Veröffentlichungsnummer: WO 2007/134913

(56) Entgegenhaltungen:
- DD-A5- 47 829
- DE-A1- 4 105 419

## Beschreibung

### Gebiet der Erfindung

Die Erfindung betrifft Verfahren zur Herstellung eines Wälzlagerbauteils.

### Hintergrund der Erfindung

Aus der DD 47 829 A5 ist ein Wälziagerring mit einer in einem Metallspritzverfahren Laufschicht bekannt. Die die Wälzkörper kontaktierende Laufschicht ist auf ein tragendes Teil des Wälzlagerrings aufgebracht, weiches beispielsweise aus einer Leichtmetallknetlegierung besteht. Aus der DE 4105419 ist ein verfahren zum Herstellen von Scheiben aus zwei Legierungen bekannt.

Wälzlager bestehen bekanntlich aus wenigstens zwei Bauteilen, nämlich einem Innenring und einem Außenring, zwischen denen die Wälzkörper, seien es Kugeln oder Rollen oder ähnliches, laufen. Üblicherweise werden solche rotationssymmetrischen Wälzlagerbauteile spanend hergestellt und anschließend zur Verbesserung der Wälzermüdungsfestigkeit einsatzgehärtet oder carbonitriert. Aufgrund der Beanspruchungen sind beispielsweise beim Einsatzhärten hohe Aufkohlungstiefen von mehr als 2 mm erforderlich, die eine Wärmebehandlungsdauer, in Abhängigkeit vom gewählten Werkstoff, von mindestens 15 - 20 Stunden bedingen. Weitere Modifikationen der Randschichteigenschaften sind nur durch die Wahl eines anderen, im Allgemeinen höher legierten Grundwerkstoffs möglich. Der Übergang zu einem höherwertigen Grundwerkstoff ist jedoch mit höheren Kosten verbunden.

### Zusammenfassung der Erfindung

Der Erfindung liegt damit das Problem zugrunde, ein Verfahren zur Herstellung eines Wälzlagerbauteils anzugeben, womit das Wälzlagerbauteil auf einfache und kostengünstige Weise herstellbar ist.

Zur Lösung dieses Problems sind zwei Verfahren zur Herstellung eines Wälzlagerbauteils durch Sprühkompaktieren, das heißt Zerstäuben einer Stahlschmelze in einem Schutzgasstrom in kugelförmige Tröpfchen, Abkühlung der Metalltröpfchen durch das Gas auf eine Temperatur, die höchstens der Liquidustemperatur entspricht, und bilden eines hochdichten Materialverbundes durch Auftreffen der Tropfen mit hoher Geschwindigkeit auf eine Fläche, vorgesehen.

Im ersten erfindungsgemäßen Verfahren wird in einem ersten Schritt ein Träger durch Sprühkompaktieren hergestellt, wozu das den Träger bildende Metall auf einen Bauteilhalter aufgesprüht wird, wonach in einem zweiten Schritt eine Metallschicht auf den Träger durch Aufsprühen sprühkompaktiert wird, die anschließend zur Ausbildung einer Wälzlagerlauffläche nachbearbeitet wird.

Im zweiten erfindungsgemäßen Verfahren wird in einem ersten Schritt eine Metallschicht durch Sprühkompaktieren hergestellt, wozu das die Metallschicht bildende Metall auf einen Bauteilhalter aufgesprüht wird, wonach in einem zweiten Schritt ein sprühkompaktierter Träger durch Aufsprühen des Trägermetalls auf die Metallschicht hergestellt wird, wonach nach Entfernen des Bauteilhalters die Metallschicht zur Ausbildung der Wälzlagerlauffläche nachbearbeitet wird.

Ein Wälzlagerbauteil, das durch ein der erfindungsgemäßen Verfahren hergestellt ist, ist, anders als übliche Wälzlagerbauteile, nicht mehr aus einem homogenen Material, sondern aus einem Werkstoffverbund oder einem Verbundwerkstoff spanend herausgearbeitet, bei dem die Wälzlagerlauffläche bildende Randschicht in einem Metallsprühverfahren hergestellt ist. Bei einem solchen Sprühkompaktier-Verfahren wird in einem Gaszerstäuber eine Stahlschmelze in einem Schutzgasstrom in kugelförmige Tröpfchen zerstäubt. Durch das Gas werden die Metalltröpfchen schnell auf eine Temperatur abgekühlt, die zwischen der Liquidus- und der Solidustemperatur liegt, häufig sogar unter der Solidustemperatur. Die derart abgekühlten Tropfen bewegen sich mit hoher Geschwindigkeit. Sie weisen eine teigige Konsistenz auf. Treffen die Tropfen nun mit hoher Geschwindigkeit auf eine Fläche, im vorliegenden Fall den Träger, auf, so Kompaktieren sie aufgrund der ihnen eigenen kinetischen Energie. Es bildet sich ein hochdichter Materialverbund. Die Herstellung seigerungsfreier sowie porenarmer Metallschichten mit homogener Struktur und einer höhen Dichte ist durch das Sprühkompaktieren möglich. Diese Vorteile werden bei den erfindungsgemäßen verfahren ausgenutzt. Denn erfindungsgemäß wird wie beschrieben die Wälzlagerlauffläche bildende Metallschicht in einem Sprühverfahren ausgebildet, wobei nach dem Sprühen die Metallschicht lediglich noch zur Ausbildung der Wälzlagerlauffläche nachbearbeitet werden muss.

Mit dem Herstellen in einem Sprühverfahren sind eine Reihe von Vorteilen verbunden. Denn hinsichtlich der Zusammensetzung der Metallschicht und mithin der Einstellung der physikalischen, chemischen und mechanischen Eigenschaften der Metallschicht besteht ein hohes Maß an Flexibilität, nachdem sich die Zusammensetzung der Metallschicht insbesondere hinsichtlich der einzelnen die mechanischen, physikalischen und chemischen Eigenschaft bestimmenden Komponenten fast beliebig variieren lässt. Es lassen sich also bereits durch entsprechende Materialwahl Eigenschaftskombinationen im Bereich der Wälzlagerlauffläche realisieren, wie sie sich durch die üblichen thermochemischen Behandlungsverfahren zum Aufkohlen beziehungsweise Carbonitrieren nicht erreichen lassen. Die langdauernde Einsatzhärtebehandlung kann folglich entfallen. Die stets durchzuführende Wärmebehandlung des Wälzlagerbauteils ist damit lediglich noch von der Bauteildimension und somit dem Gewicht, jedoch nicht mehr von der Dicke einer zu modifizierenden Randschicht abhängig. Bei geeigneter Abstimmung von Trägermetall und dem Metall der aufgebrachten Metallschicht (die auch als Funktionsschicht bezeichnet werden kann) können in Analogie zu unterschiedlichen Umwandlungsverhalten bei einsatzgehärteten Werkstoffen bei der Wärmebehandlung auch Druckeigenspannungen aufgebaut werden. Durch eine Auswahl von carbidreichen Metallen zur Bildung der Metallschicht lässt sich auch die Verschleißbeständigkeit gegenüber konventionellen Lösungen deutlich steigern. Auch kann die Herstellung der Wälzlagerbauteile deutlich schneller vonstatten gehen, nachdem nach dem Ausbilden der Metallschicht lediglich noch eine Nachverdichtung der Restporosität in den nachfolgenden Fertigungsschritten wie Schmieden und/oder Ringwalzen, gefolgt von einer üblichen Wärmebehandlung ohne zeitintensive diffusionsgesteuerte Ausbildung der Wälzlagerlaufschicht erfolgen muss.

Der Träger ist in einem Sprühverfahren als sprühkompaktiertes Bauteil hergestellt. Das heißt, auch zur Herstellung des Trägers nutzt man die Vorteile des Sprühverfahrens, wie sie oben beschrieben wurden, aus, wobei bei der Wahl des Trägermaterials andere Eigenschaftsanforderungen eine Rolle spielen als bei der Wahl des Materials der Metallschicht.

Es ist vorgesehen, in einem ersten Schritt den Träger in einem Sprühverfahren herzustellen, wozu das den Träger bildende Metall auf einen Bauteilhalter aufgesprüht wird, wonach in einem zweiten Schritt die Metallschicht aufgesprüht wird. Dabei wird bevorzugt die Metallschicht auf dem noch warmen Träger aufgesprüht, um eine innige Materialverbindung zu gewährleisten.

Das oben beschriebene Verfahren, bei dem die Metallschicht auf einen bereits vorhandenen Träger, nämlich einen selbst vorab sprühkompaktiert hergestellten Träger, aufgesprüht wird, lässt primär die Herstellung von Innenringen zu, nachdem das Werkzeug zur Durchführung des Sprühverfahrens relativ groß ist und nicht in einen der Herstellung eines Außenrings dienenden Träger eingeführt werden kann. Um jedoch auch die Herstellung eines Außenrings mit der besonders vorteilhaften sprühkompaktierten Metallschicht zu ermöglichen, sieht ein weiteres erfindungsgemäßes Verfahren zur Herstellung eines Wälzlagerbauteils vor, in einem ersten Schritt die Metallschicht in einem Sprühverfahren herzustellen, wozu das die Metallschicht bildende Metall auf einen Bauteilhalter aufgesprüht wird, und im nachhinein im zweiten Schritt den Träger durch Aufsprühen des Trägermetalls auf die Metallschicht herzustellen, wonach nach Entfernen des Bauteilhalters die Metallschicht zur Ausbildung der Wälzlagerlauffläche nachbearbeitet wird. Auch hier bietet sich bevorzugt an, dass das Trägermetall auf die noch warme Metallschicht aufgesprüht wird.

Die Herstellungsreihenfolge ist bei diesem Verfahren verglichen mit der Reihenfolge zur Herstellung eines Innenrings mit sprühkompaktiertem Träger umgekehrt. Hier wird zunächst auf den Bauteilhalter die Metallschicht aufgesprüht, die anschließend die innen liegende Wälzlagerlauffläche des Außenrings bildet. Anschließend wird der Träger aufgesprüht, der das Äußere des fertigen Außenring-Bauteils bildet.

### Kurze Beschreibung der Zeichnungen

Weitere Vorteile, Merkmale und Einzelheiten der Erfindung ergeben sich aus der nachfolgenden Beschreibung der Ausführungsbeispiele. Dabei zeigen:
- Fig. 1: eine Schnittansicht durch ein nicht beanspruchtes Bauteil in Form eines Innenrings,
- Fig. 2: eine Prinzipdarstellung zur Erläuterung der Herstellung des Bauteils aus Fig. 1,
- Fig. 3: eine vergrößerte Längsschnittansicht durch ein nicht beanspruchtes Bauteil ähnlich dem aus Fig. 1,
- Fig. 4: eine Darstellung zur Erläuterung der Herstellung eines erfindungsgemäßen Bauteils, bei dem sowohl der Träger als auch die Metallschicht in einem Sprühverfahren hergestellt sind,
- Fig. 5: eine Schnittansicht durch ein weiteres erfindungsgemäßes Bauteil in Form eines Außenrings, und
- Fig. 6: eine Prinzipdarstellung zur Erläuterung der Herstellung des Bauteils aus Fig. 5.

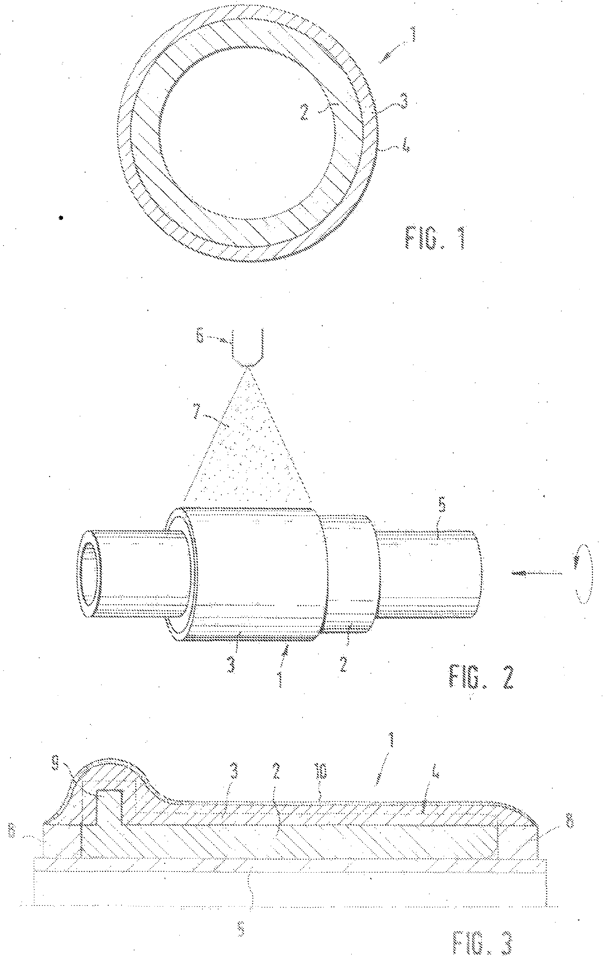

Fig. 1 zeigt ein Wälzlagerbauteil 1 in Form eines Innenrings, bestehend aus einem üblicherweise hohlzylindrischen Träger 2 und einer auf diesen in einem Sprühverfahren aufgebrachten Metallschicht 3. Bei dem Träger 2 handelt es sich um ein vorgefertigtes Bauteil, das aus einem Metall, wie es üblicherweise für die Herstellung von spanend ausgearbeiteten Wälzlagerbauteilen dient, besteht. Das Material der Metallschicht 3 kann beliebig gewählt werden, solange es für eine Verarbeitung durch Sprühkompaktieren geeignet ist, bevorzugt kommen dabei Schnellarbeitsstähle oder warmfeste Stähle in Betracht. Grundsätzlich kann jedoch die Zusammensetzung beliebig sein, das heißt, die üblichen Stahlbestandteile wie C, N, Si, Mn, T, S, Cr, Mo, V, Nb, W und Fe als Rest nebst üblicher Verunreinigungen können einerseits so in ihrer Menge bemessen werden, dass der Werkstoff grundsätzlich in einem Metallsprühverfahren verarbeitet werden kann, zum anderen können sie so gewählt werden, dass die hergestellte Metallschicht die gewünschten physikalischen, chemischen und mechanischen Eigenschaften aufweist. Die Verschleißbeständigkeit kann dabei durch Zugabe von geeigneten nichtmetallischen Partikeln wie Aluminiumoxid oder Siliziumkarbid in Form von Kugeln oder Fasern in die Schmelze noch individuell beeinflusst werden. Nach dem Ausbilden der Metallschicht 3 wird diese in einem mechanischen Nachbearbeitungsverfahren zunächst zur Verringerung des Porenvolumens noch weiter kompaktiert, beispielsweise durch Schmieden oder Walzen, wonach die übliche Wärmebehandlung ohne die spezielle Einsatzhärtung erfolgt, an die sich die Bearbeitung der Metallschicht 3 zur Ausbildung der äußeren Wälzlagerlauffläche 4 anschließt, wobei diese Bearbeitung auch vor der Durchführung der Wärmebehandlung erfolgen kann.

Fig. 2 zeigt eine Prinzipdarstellung zur Erläuterung der Herstellung des Wälzlagerbauteils 1 aus Fig. 1. Auf einen Bauteilhalter 5, beispielsweise ein Metall- oder Keramikrohr, ist der vorgefertigte, ein integrales Bauteil des späteren Wälzlagerbauteils bildende Träger 2 aufgeschoben, wobei dieser über entsprechende-Abstandshalter gegebenenfalls in Position gehalten werden kann. Der Bauteilhalter 5 ist in einer Vorschubeinrichtung, die hier nicht näher gezeigt ist, aufgenommen, über welche er einerseits linear verschoben werden kann, andererseits auch gedreht werden kann, wie durch die beiden Bewegungspfeile dargestellt ist. Über die Vorschubeinrichtung wird der Bauteilhalter 5 an einer Sprüheinrichtung 6, die hier nicht im Detail dargestellt ist, vorbeibewegt. Die Sprüheinrichtung 6 sprüht über einen Gaszerstäuber feinste Metalltröpfchen 7 einer Metallschmelze in einem Schutzgasstrom auf den Träger 2, so dass sich mit zunehmender Verweilzeit während der Rotation des Bauteilhalters 5 die Metallschicht auf den Träger 2 ausbildet. Der Träger 2 selbst ist erwärmt, bevorzugt auf eine Temperatur in der Nähe seiner Solidustemperatur, so dass sich eine optimale Haftung der aufgesprühten Metallschicht 3 auf dem Träger 2 im Grenzflächenbereich ergibt, es kommt zu einer grenzflächennahen Legierungsbildung. In der beschriebenen Weise wird der gesamte Träger 2 mit der Metallschicht 3 belegt, wonach er vom wiederverwendbaren Bauteilhalter 5 abgenommen und nachbearbeitet wird.

Der Bauteilhalter wird zur Aufnahme der Einzelrohlinge (normalerweise sind eine Vielzahl einzelner Rohlinge hintereinander aufgereiht) oder wenn zweilagig besprüht wird, benötigt. Werden die Teile von einem langen Rohr abgelängt, wird nur dieses zum Besprühen mittels der Vorschubeinrichtung bewegt und gedreht.

Fig. 3 zeigt eine Prinzipdarstellung eines Längsschnitts durch ein auf diese Weise hergestelltes Wälzlagerbauteil 1. Gezeigt ist der Bauteilhalter 5, an dem Halteringe 8 vorgesehen beziehungsweise aufgeschoben sind. Zwischen diesen ist der vorgefertigte Träger 2, der einen radial abstehenden, angeformten Ringbund 9 aufweist, angeordnet. Auf den Träger 2 ist die Metallschicht 3 aufgesprüht. Diese weist eine äußere poröse Randschicht 10 auf, die zusammen mit einem gewissen Anteil der Metallschicht 3 zur Ausbildung der Wälzkörperlaufbahn 4 spanend abzunehmen ist. Die Wälzkörperlaufbahn 4 ist in Fig. 3 gestrichelt dargestellt.

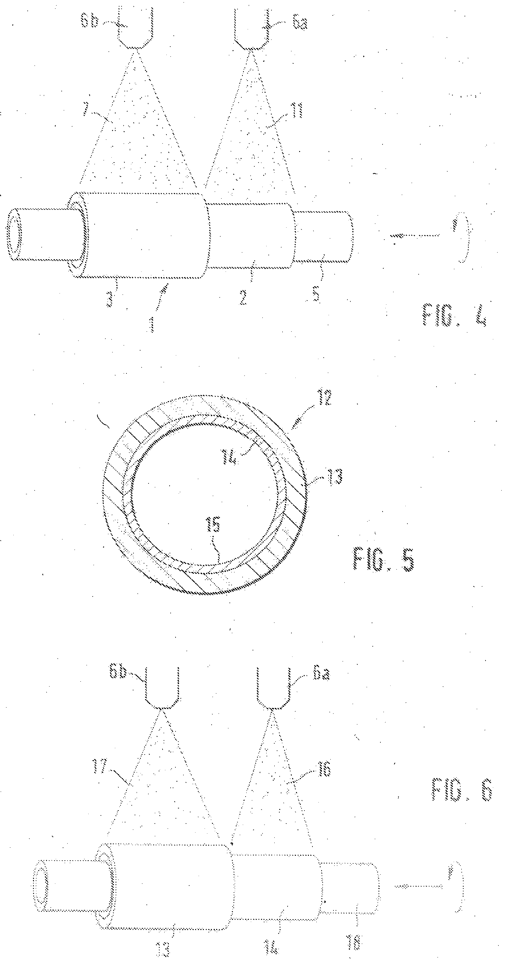

Während die Fig. 2 die Herstellung eines Wälzlagerbauteils unter Verwendung eines vorgefertigten Trägers zeigt, zeigt Fig. 4, erfindungsgemäß, sowöhl den Träger 2 als auch die Metallschicht 3 in einem Metallsprühverfahren herzustellen. Vorgesehen sind zwei Sprüheinrichtungen 6a und 6b, die unmittelbar einander nachgeschaltet sind. Auch hier wird ein wieder verwendbarer Bauteilhalter 5. Dieser wird ebenfalls über eine nicht näher gezeigte Vorschubeinrichtung linear bewegt und gleichzeitig gedreht. Dabei wird er zunächst an der Sprüheinrichtung 6a vorbeigefördert. Diese sprüht feinste Metalltröpfchen 11 einer Stahlschmelze, die zur Herstellung des Trägers 2 dient, auf die Mantelfläche des Bauteilhalters 5. Hierüber wird durch Sprühkompaktierung der Träger 2 ausgebildet. Infolge der Vorschubbewegung gelangt der Träger 2, der noch eine Restwärme infolge der aufgesprühten Stahlschmelze aufweist, in den Arbeitsbereich der unmittelbar nachgeschalteten Sprüheinrichtung 6b, die die feinsten Metalltröpfchen 7 zur Herstellung der Metallschicht 3 aufsprüht. Ist der Träger 2 im relevanten Oberflächenbereich mit der Metallschicht 3 belegt, wird der Sprühvorgang beendet und das Wälzlagerbauteil 1 vom Bauteilhalter 5 genommen. Dies ist möglich, nachdem im Grenzflächenbereich zwischen dem Bauteilhalter 5 und dem aufgesprühten Träger 2 eine poröse Randschicht gebildet wird, die die Entformung des Bauteilhalters 5 erleichtert. Die poröse Randschicht auf dem Trägerinnendurchmesser ist anschließend spanend abzuarbeiten. Dieses Verfahren ermöglicht durch eine Steuerung der Überlappung der Sprühkegel darüber hinaus die Einstellung verschiedener steiler Eigenschaftsgradienten zwischen dem Träger 2 und der Metallschicht 3.

Fig. 5 zeigt ein weiteres Wälzlagerbauteil 12, hier in Form eines Außenrings, mit einem das Bauteiläußere bildenden Träger 13, an dessen Innendurchmesser eine Metallschicht 14, deren Innenfläche die Wälzlagerlauffläche 15 bildet, vorgesehen ist. Die Herstellung eines solchen Wälzlagerbauteils 12 mit einer inneren Metallschicht erfolgt ebenfalls in einem Verfahren, bei dem sowohl der Träger 13 als auch die Metallschicht 14 aus den entsprechenden Stahlschmelzen aufgesprüht werden.

Fig. 6 zeigt das verfahrensgemäße Vorgehen in Form einer Prinzipdarstellung. Auch hier wird ein wieder verwendbarer Bauteilhalter 18 verwendet, ebenso sind auch hier zwei Sprüheinrichtungen 6a und 6b vorgesehen. Über die nicht näher gezeigte Vorschubeinrichtung wird der Bauteilhalter 18 zunächst an der Sprüheinrichtung 6a vorbeigeführt, die hier feinste Metalltröpfchen 16 aufsprüht, hier aber das Metall, das zur Ausbildung der Metallschicht 14 direkt auf der Oberfläche des Bauteilhalters 18 benötigt wird. Auch hier bildet sich im Grenzflächenbereich zwischen der Metallschicht 14 und der Oberfläche des Bauteilträgers 18 eine poröse Randschicht auf, ähnlich wie sie in Fig. 3 dargestellt ist, die jedoch zur Ausbildung der Wälzkörperlauffläche 15 zusammen mit einem gewissen Metallschichtanteil spanend abgetragen wird.

Bei weiterer linearer Bewegung des Bauteilhalters 18 gelangt die aufgesprühte Metallschicht 14 in den Arbeitsbereich der Sprüheinrichtung 6b, die feinsten Metalltröpfchen 17 der Stahlschmelze zur Bildung des Trägers 13 auf die noch heiße Außenfläche der Metallschicht 14 aufsprüht. Eine Erwärmung ist auch hier infolge der Restwärme der Metallschicht 14 nicht erforderlich. Es ergibt sich auch hier eine innige metallische Verbindung zwischen dem Metall der Metallschicht 14 und dem des Trägers 13.

Auch hier erfolgt nach dem Entformen des Bauteilhalters 18 die entsprechende Nachbearbeitung, zum einen zur Entfernung der porösen Randschicht der Metallschicht 14 zur Herausarbeitung der Wälzkörperlauffläche 15, zum anderen an der Außenseite die Entfernung der porösen Randschicht des Trägers 13 sowie die entsprechende mechanische Schmiede- oder Walzbehandlung zur Verringerung des Porenvolumens, gefolgt von der bereits beschriebenen Temperaturbehandlung.

Abschließend ist noch darauf hinzuweisen, dass die Dicke der Metallschicht und die Dicke des vorgefertigten Trägers beziehungsweise die Dicke des durch Sprühkompaktierung hergestellten Trägers beliebig sein kann, bevorzugt liegen sie in einem ähnlichen dicken Bereich. Beispielsweise kann die Dicke des Trägers für einen Innenring zur Aufnahme einer Welle mit einem Durchmesser von 100 mm ca. 10 mm betragen, während die Dicke der Metallschicht ca. 6 - 8 mm betragen kann. In ähnlichen Bereichen liegen die Dicken eines entsprechenden, das Wälzlager abschließenden Außenrings. Die Dicken variieren entsprechend der Größe des Durchmessers des jeweiligen Wälzlagerbauteils.

### Liste der Bezugszahlen

- 1: Wälzlagerbauteil
- 2: Träger
- 3: Metallschicht
- 4: Wälzlagerlauffläche
- 5: Bauteilhalter
- 6: Sprüheinrichtung
- 6a: Sprüheinrichtung
- 6b: Sprüheinrichtung
- 7: Metalltröpfchen
- 8: Haltering
- 9: Ringbund
- 10: Randschicht
- 11: Metalltröpfchen
- 12: Wälzlagerbauteil
- 13: Träger
- 14: Metallschicht
- 15: Wälzlagerlauffläche
- 16: Bauteilhalter
- 17: Metalltröpfchen
- 18: Bauteilhalter

## Patentansprüche

1. Verfahren zur Herstellung eines Wälzlagerbauteils durch Sprühkompaktieren, das heißt Zerstäuben einer Stahlschmelze in einem Schutzgasstrom in kugelförmige Tröpfchen, Abkühlung der Metalltröpfchen durch das Gas auf eine Temperatur, die höchstens der Liquidustemperatur entspricht, und bilden eines hochdichten Materialverbundes durch Auftreffen der Tropfen mit hoher Geschwindigkeit auf eine Fläche, wobei in einem ersten Schritt ein Träger (2) durch Sprühkompaktieren hergestellt wird, wozu das den Träger (2) bildende Metall (11) auf einen Bauteilhalter (5) aufgesprüht wird, wonach in einem zweiten Schritt eine Metallschicht (3) auf den Träger durch Aufsprühen sprühkompaktiert wird, die anschließend zur Ausbildung einer Wälzlagerlauffläche (4) nachbearbeitet wird.

2. Verfahren nach Anspruch 1, **dadurch gekennzeichnet, dass** die Metallschicht (3) auf den noch warmen Träger (2) gesprüht wird.

3. Verfahren nach Anspruch 1 oder 2, **dadurch gekennzeichnet, dass** die Metalltröpfchen vor dem Auftreffen auf die Fläche durch das Gas auf eine Temperatur unterhalb der Solidustempertatur abgekühlt werden.

4. Verfahren zur Herstellung eines Wälzlagerbauteils durch Sprühkompaktieren, das heißt Zerstäuben einer Stahlschmeize in einem Schutzgasstrom in kugelförmige Tröpfchen, Abkühlung der Metalltröpfchen durch das Gas auf eine Temperatur, die höchstens der Liquidustemperatur entspricht, und bilden eines hochdichten Materialverbundes durch Auftreffen der Tropfen mit hoher Geschwindigkeit auf eine Fläche, wobei in einem ersten Schritt eine Metallschicht (14) durch Sprühkompaktieren hergestellt wird, wozu das die Metallschicht (14) bildende Metall (16) auf einen Bauteilhalter (18) aufgesprüht wird, wonach in einem zweiten Schritt ein sprühkompaktierter Träger (13) durch Aufsprühen des Trägermetalls (17) auf die Metallschicht (14) hergestellt wird, wonach nach Entfernen des Bauteilhalters (18) die Metallschicht (14) zur Ausbildung der Wälzlagerlauffläche (15) nachbearbeitet wird.

5. Verfahren nach Anspruch 4, **dadurch gekennzeichnet, dass** das Trägermetall (17) auf die noch warme Metallschicht (14) aufgesprüht wird.

6. Verfahren nach Anspruch 4 oder 5, **dadurch gekennzeichnet, dass** die Metalltröpfchen vor dem Auftreffen auf die Fläche durch das Gas auf eine Temperatur unterhalb der Solidustempertatur abgekühlt werden.

## Claims

1. Method for producing a rolling bearing component by spray compaction, that is to say atomizing a steel melt into spherical droplets in a stream of projective gas, cooling the metal droplets by virtue of the gas to a temperature which corresponds at most to the liquids temperature, and forming a high-density material composite by virtue of the droplets striking a surface at high speed, wherein, in a first step, a support (2) is produced by spray compaction by spraying the metal (11) which forms the support (2) onto a component holder (5), after which, in a second step, a metal layer (3) is spray-compacted onto the support by being sprayed on, said metal layer then being remachined in order to form a running surface (4) of the rolling bearing.

2. Method according to Claim 1, **characterized in that** the metal layer (3) is sprayed onto the still-warm support (2).

3. Method according to Claim 1 or 2, **characterized in that**, before they strike the surface, the metal droplets are cooled by the gas to a temperature below the solidus temperature.

4. Method for producing a rolling bearing component by spray compaction, that is to say atomizing a steel melt into spherical droplets in a stream of projective gas, cooling the metal droplets by virtue of the gas to a temperature which corresponds at most to the liquidus temperature, and forming a high-density material composite by virtue of the droplets striking a surface at high speed, wherein, in a first step, a metal layer (14) is produced by spray compaction by spraying the metal (16) which forms the metal layer (14) onto a component holder (18), after which, in a second step, a spray-compacted support (13) is produced by spraying the support metal (17) onto the metal layer (14), after which, following removal of the component holder (18), the metal layer (14) is remachined in order to form the running surface (15) of the rolling bearding.

5. Method according to Claim 4, **characterized in that** the support metal (17) is sprayed onto the still-warm metal layer (14).

6. Method according to Claim 4 or 5, **characterized in that**, before they strike the surface, the metal droplets are cooled by the gas to a temperature below the solidus temperature.

## Revendications

1. Procédé de fabrication d'un composant de palier à roulement par compactage par pulvérisation, c'est-à-dire pulvérisation d'acier en fusion dans un courant dé gaz protecteur sous forme de gouttelettes sphériques, refroidissement des gouttelettes métalliques par le gaz à une température qui correspond au maximum à la température du liquidus, et formation d'un matériau composite haute densité par incidence des gouttelettes à grande vitesse sur une surface, un support (2) étant fabriqué par compactage par pulvérisation dans une première étape, le métal (11) formant le support (2) étant à cet effet pulvérisé sur un support de composant (5), puis, dans une deuxième étape, une couche métallique (3) étant compactée par pulvérisation sur le support, laquelle est ensuite post-traitée pour réaliser une surface de roulement (4) du palier à roulement.

2. Procédé selon la revendication 1, **caractérisé en ce que** la couche métallique (3) est pulvérisée sur le support (2) encore chaud.

3. Procédé selon la revendication 1 ou 2, **caractérisé en ce que** les gouttelettes métalliques, avant leur incidence sur la surface, sont refroidies par le gaz à une température en dessous de la température du solidus.

4. Procédé de fabrication d'un composant de palier à roulement par compactage par pulvérisation, c'est-à-dire pulvérisation d'acier en fusion dans un courant de gaz protecteur sous forme de gouttelettes sphériques, refroidissement des gouttelettes métalliques par le gaz à une température qui correspond au maximum à la température du liquidus, et formation d'un matériau composite haute densité par incidence des gouttelettes à grande vitesse sur une surface, une couche métallique (14) étant fabriquée par compactage par pulvérisation dans une première étape, le métal (16) formant la couche métallique (14) étant à cet effet pulvérisé sur une support de composant (18), puis, dans une deuxième étape, un support compacté par pulvérisation (13) étant fabriqué par pulvérisation du métal de support (17) sur la couche métallique (14), puis après l'enlèvement du support de composant (18), la couche métallique (14) étant post-traitée pour réaliser la couche de roulement (15) du palier à roulement.

5. Procédé selon la revendication 4, **caractérisé en ce que** le métal de support (17) est pulvérisé sur la couche métallique (14) encore chaude.

6. Procédé selon la revendication 4 ou 5, **caractérisé en ce que** les gouttelettes métalliques sont refroidies par le gaz à une température en dessous de la température du solidus avant leur incidence sur la surface.
